# EUROPÄISCHE PATENTSCHRIFT

(11) **EP 3 833 886 B1**
(45) Veröffentlichungstag und Bekanntmachung des Hinweises auf die Patenterteilung: **12.10.2022**
(21) Anmeldenummer: 19756095.6
(22) Anmeldetag: 29.07.2019
(51) Int. Cl.: F16D 13/68, B60K 6/387, B60K 6/40, F16D 25/0638

(54) **HYBRIDMODUL MIT EINER ROTATIONSACHSE FÜR EINEN ANTRIEBSSTRANG EINES KRAFTFAHRZEUGS**
HYBRID MODULE WITH A ROTATION AXIS FOR A DRIVE TRAIN OF A MOTOR VEHICLE
MODULE HYBRIDE A AXE DE ROTATION POUR UN TRAIN D'ENTRAINEMENT D'UN VEHICULE AUTOMOBILE

(30) Priorität: 07.08.2018 DE 102018119192
(43) Veröffentlichungstag der Anmeldung: 16.06.2021
(73) Patentinhaber: Schaeffler Technologies AG & Co. KG, 91074 Herzogenaurach (DE)
(72) Erfinder: MEINHARD, Rolf, 77815 Bühl (DE)
(86) Internationale Anmeldenummer: PCT/DE2019/100693
(87) Internationale Veröffentlichungsnummer: WO 2020/030220

(56) Entgegenhaltungen:
- WO-A2-2008/064813
- WO-A2-2015/172784
- DE-A1-102005 053 887
- US-A1- 2014 124 318

## Beschreibung

Die Erfindung betrifft ein Hybridmodul mit einer Rotationsachse für einen Antriebsstrang eines Kraftfahrzeugs gemäß dem Oberbegriff des Anspruchs 1, aufweisend zumindest die folgenden Komponenten:
- einen Antriebswellenanschluss zur Aufnahme eines Drehmoments;
- einen Getriebewellenanschluss zur Abgabe eines Drehmoments;
- eine Drehmomentaufnahme zur Aufnahme eines Drehmoments von einer elektrischen Maschine;
- eine trockene Lamellenkupplung mit zwei relativ zueinander um die Rotationsachse rotierbaren Lamellenkörben, nämlich einem Außenkorb und einem Innenkorb umfassend ein Lamellenpaket,
wobei ein Soll-Drehmoment von dem Antriebswellenanschluss auf die Drehmomentaufnahme und auf den Getriebewellenanschluss ausschließlich dann übertragbar ist, wenn das Lamellenpaket mit einer Soll-Anpresskraft axial verpresst ist. Das Hybridmodul ist vor allem dadurch gekennzeichnet, dass jeweils drehmomentsteif verbunden sind:
- der Innenkorb mit dem Antriebswellenanschluss; sowie
- der Außenkorb mit dem Getriebewellenanschluss und mit der Drehmomentaufnahme.

Aus dem Stand der Technik sind Hybridmodule für einen Hybridantriebsstrang bekannt, welche dazu eingerichtet sind, ein Drehmoment einer elektrischen Maschine in den (konventionellen) Antriebsstrang, umfassend eine Verbrennungskraftmaschine mit einer Antriebswelle und ein Getriebe mit einer Getriebewelle, zu integrieren. Das Hybridmodul umfasst dann einen Anschluss für oder umfasst die (zusätzliche) elektrische Maschine und eine Reibkupplung zum lösbaren Einkuppeln der elektrischen Maschine für eine Drehmomentübertragung. Alternativ ist die elektrische Maschine als Hauptantriebsaggregat ausgeführt und die Verbrennungskraftmaschine mittels der Reibkupplung des Hybridmoduls hinzuschaltbar beziehungsweise für einen Motorstart (Anlassen) mit der elektrischen Maschine verbindbar.

Die elektrische Maschine ist beispielsweise wie eine Lichtmaschine, beispielsweise diese ersetzend, abweichend von der Motorachse der Verbrennungskraftmaschine, meist achsparallel dazu, angeordnet und mittels eines Zugmitteltriebs, beispielsweise eines (Keil-) Riementriebs, mit der Getriebewelle und/oder der Antriebswelle verbunden, wobei die Reibkupplung zwischengeschaltet ist. Gemäß einer anderen Ausführungsform ist die elektrische Maschine koaxial zu der Motorachse, also fluchtend mit der Antriebswelle der Verbrennungskraftmaschine, angeordnet, wobei die Reibkupplung verbunden mit dem Rotor der elektrischen Maschine im Zentrum der elektrischen Maschine angeordnet ist.

In einer Konfiguration, bei welcher die Reibkupplung mit der Antriebswelle lösbar verbunden ist, wird diese Reibkupplung auch als K0 [Kupplung-Null] bezeichnet. In einer Konfiguration, bei welcher diese Reibkupplung mit der Getriebewelle lösbar verbunden ist, wird diese Reibkupplung auch als K1 [Kupplung-Eins] bezeichnet.

Mit der elektrischen Maschine ist ein Drehmoment auf die Antriebswelle und/oder auf die Getriebewelle übertragbar, wodurch ein von der Antriebswelle abgegebenes Drehmoment überlagerbar ist, also ein sogenanntes Boosten stattfindet. In einigen Anwendungen ist auch ein Anlassen der Verbrennungskraftmaschine, also ein Anschleppen der Antriebswelle aus dem Stand, mittels der elektrischen Maschine ermöglicht. Damit ist es möglich, auf den bisher eingesetzten Anlasser und Anlasserzahnkranz zu verzichten. Weiterhin ist bei einigen Anwendungen die elektrische Maschine als Generator betreibbar, also zur Umwandlung eines von außen eingegebenen Drehmoments in elektrische Energie eingerichtet. Das von außen eingebrachte Drehmoment wird von dem Getriebe, also zur Rekuperation, oder der Verbrennungskraftmaschine eingebracht, wobei die elektrische Energie direkt oder über einen Speicher an einen elektrischen Verbraucher abgebbar ist.

In einigen Anwendungen ist eine weitere elektrische Maschine als elektrischer Antriebsmotor vorgesehen, mittels welchem ein (beispielsweise rein) elektrisches Fahren möglich ist. Dieser elektrische Antriebsmotor gibt ein Drehmoment parallel zu der Verbrennungskraftmaschine oder allein an das Getriebe ab. Letzteres wird als rein elektrisches Fahren bezeichnet. Die Verbrennungskraftmaschine dient dann als Energiequelle, beispielsweise als sogenannter Range-Extender, wenn die elektrischen Speicher nicht mehr ausreichend Energie bereithalten. Dies geschieht in Form einer Drehmomentabgabe an das Getriebe und/oder ein Aufladen des elektrischen Speichers über die elektrische Maschine des Hybridmoduls. Sollen die entsprechenden Schaltzustände der Verbrennungskraftmaschine beide separat zur Verfügung stehen, wird sowohl eine K0-Kupplung als auch eine K1-Kupplung benötigt, wobei die Reibkupplung des Hybridmoduls dann die K0-Kupplung bildet und die K1-Kupplung im Drehmomentstrang ausgehend von der Antriebswelle hin zu dem Getriebe dem Hybridmodul nachgeschaltet ist. Ist die K1-Kupplung zwischengeschaltet, so ist der Getriebewellenanschluss des Hybridmoduls mittels einer Modulwelle mit dem K1-Kupplungswellen-eingang verbunden und mittels der K1-Kupplung lediglich mittelbar, und zwar lösbar, mit einer Getriebeeingangswelle verbunden.

In vielen Anwendungen ist es erwünscht, die Reibkupplung des Hybridmoduls mit einem geringen Außendurchmesser auszuführen. Um dennoch erforderliche Drehmomente übertragen zu können, wird daher bevorzugt als Reibkupplung eine Lamellenkupplung eingesetzt, wobei bevorzugt eine trockene Lamellenkupplung eingesetzt wird, welche einfacher in der Umsetzung und eine ausreichende Verschleißresistenz für den Anwendungsfall aufweist. Zudem ist in der Regel der Wirkungsgrad aufgrund der geringeren mitrotierenden Masse im Vergleich zu einer nassen Lamellenkupplung, bei welcher die Kühlflüssigkeit mitgeschleppt wird, höher.

Eine Lamellenkupplung weist zumindest eine Reiblamelle und eine korrespondierende Anzahl von Gegenlamellen auf. Die Anzahl der Gegenlamellen bestimmt sich durch die Bauart der Lamellenkupplung. Eine Reiblamelle weist in der Regel in axialer Richtung links und rechts jeweils eine Reibfläche auf, welche mit einer Reibfläche der benachbarten Gegenlamelle in Kontakt bringbar und zur reibschlüssigen Kraftübertragung verpressbar sein soll. Die Reiblamellen sind dazu in einen Lamellenkorb, beispielsweise als Außenlamellen in dem sogenannten Außenkorb, axial verschiebbar eingehängt. Die Gegenlamellen sind in einen weiteren Lamellenkorb, entsprechend beispielsweise als Innenlamellen in dem sogenannten Innenkorb, axial verschiebbar eingehängt. Die Reiblamellen sollen also links und rechts in axialer Richtung mit einer korrespondierenden Reibfläche in reibschlüssigen Kontakt bringbar sein. Dazu ist an einer axialen Außenseite des Lamellenpakets, beispielsweise links der (von links nach rechts gesehen) ersten Reiblamelle, eine Anpressplatte beziehungsweise Anpresslamelle vorgesehen, welche auf der der ersten Reiblamelle zugewandten Seite, entsprechend beispielsweise rechts, eine erste (reiblamellenseitige) Reibfläche und auf der gegenüberliegenden Seite, entsprechend beispielsweise links, eine Kraftangriffsfläche für ein Einleiten einer Anpresskraft aufweist. An der anderen axialen Außenseite des Lamellenpakets, beispielsweise rechts der (von links nach rechts gesehen) letzten Reiblamelle, ist eine korrespondierende reiblamellenseitige Reibfläche von dem reiblamellenseitigen Lamellenkorb, beispielsweise dem Innenkorb, selbst gebildet. Bei einer solchen Konfiguration resultiert eine korrespondierende Anzahl (n-1) von (beidseitig Reibflächen aufweisenden) Gegenlamellen um eins geringer als die Anzahl (n) der Reiblamellen. Es sei darauf hingewiesen, dass die Anpressplatte oder Anpresslamelle hier nicht als Gegenlamelle bezeichnet wird. Die Anzahl der Reibpaarungen entspricht in dieser Konfiguration der zweifachen Anzahl der Reiblamellen. Es sind aber auch andere Konfigurationen möglich, wobei mit einer möglichst geringen Anzahl von Lamellen eine möglichst hohe Anzahl von Reibpaarungen angestrebt werden sollte.

Zum Übertragen eines Drehmoments werden die Lamellen des Lamellenpakets axial miteinander verpresst und so ist reibschlüssig ein Drehmoment übertragbar, welches in erster Näherung dem Produkt aus dem mittleren Radius der Reibflächen, der Anpresskraft, dem Reibkoeffizienten und der Anzahl von Reibpaarungen entspricht. Beispielsweise wird die Anpresskraft bereitgestellt, indem ein Zentralausrücker im Zentrum der Lamellenkörbe eine Membranfeder, auch vereinfacht als Tellerfeder bezeichnet, aus einer ausgelenkten Lage in eine eingerückte Lage infolge eines Ausrückens freilässt, sodass die Federkraft der Membranfeder auf die Anpressplatte oder Anpresslamelle aufgegeben wird. Dabei sind unter Umständen weitere Elemente axial zwischengeschaltet, wie beispielsweise eine Modulationsfeder und/oder ein Anpresstopf, wobei der Anpresstopf bevorzugt zugleich das Übertragungselement zwischen dem Zentralausrücker und der Membranfeder und/oder zwischen der Membranfeder und der Modulationsfeder bildet.

Soll kein Drehmoment übertragen werden, werden die Lamellen des Lamellenpakets axial voneinander beabstandet, beispielsweise indem der Zentralausrücker die Membranfeder auslenkt und somit die Einleitung der Federkraft von der Membranfeder auf das Lamellenpaket unterbindet. Die Lamellen beabstanden sich nach Art einer Rutschkupplung selbsttätig infolge gegenläufig anliegender Drehmomente oder werden von einer Federeinrichtung aktiv voneinander getrennt. Ein Trennen bedeutet, dass dann tatsächlich kein Kontakt mehr vorliegt, also auch kein Drehmoment übertragbar ist, oder dass dann die verbleibende axiale Kraft in Richtung der das Lamellenpaket verpressenden Federkraft derart gering ist, dass das noch immer übertragbare Schleppmoment vernachlässigbar oder zumindest für die Gegenkräfte im System ausreichend gering ist. Beispielsweise ist das dann übertragbare Drehmoment derart gering, dass die Rotorwelle der elektrischen Maschine von dem übertragbaren Drehmoment erzeugt von der Verbrennungskraftmaschine oder umgekehrt die Kurbelwelle der Verbrennungskraftmaschine von der elektrischen Maschine nicht in Rotation versetzbar ist.

Ein Lamellenkorb, auch als Lamellentopf bezeichnet, ist mit einer Wellennabe verbunden oder bildet einstückig eine solche Wellennabe, sodass dieser Lamellenkorb mit der Antriebswelle und/oder Getriebewelle dauerhaft drehmomentübertragend verbindbar ist. Beispielsweise ist der Außenkorb mit der Antriebswelle verbunden, wobei in einer Ausführungsform ein Drehschwingungsdämpfer und/oder ein Drehschwingungstilger zwischen und/oder parallelgeschaltet ist. Der Innenkorb ist mit einer Drehmomentaufnahme und mit der Getriebeeingangswelle beziehungsweise Modulwelle verbunden, wobei die Drehmomentaufnahme eine Zugmittelscheibe oder ein Rotor beziehungsweise eine Rotoranbindung ist. Die Drehmomentaufnahme ist bevorzugt sowohl zur Aufnahme als auch zur Abgabe eines Drehmoments eingerichtet, sodass sowohl beispielsweise ein Boosten, also eine Drehmomentaufnahme von der elektrischen Maschine an die Lamellenkupplung, als auch ein Generatorbetrieb, also eine Drehmomentabgabe an die elektrische Maschine von der Lamellenkupplung ermöglicht ist.

Derzeit wird ein Anlassen der Verbrennungskraftmaschine oftmals weiterhin mittels eines Anlasserzahnkranzes und eines separaten Anlassers, also einer weiteren elektrischen Maschine, durchgeführt. Dies liegt daran, dass trotz erreichbarer ausreichender Drehmomente zum Kaltanlassen der Verbrennungskraftmaschine die Kraftübertragung über die als K0-Kupplung ausgeführte Lamellenkupplung des Hybridmoduls unzureichend ist. Es sind zwei unterschiedliche Arten eines Anlassens zu unterscheiden, nämlich der Direkt-Start und der Schwungstart. Bei dem Direkt-Start wird die warme Verbrennungskraftmaschine angelassen, wobei die Rotorwelle elektrische Maschine aus dem Stand bei geschlossener K0-Kupplung auf die notwendige Anlassdrehzahl beschleunigt wird. Bei dem Schwungstart wird die Rotorwelle der elektrischen Maschine zunächst bei geöffneter K0-Kupplung auf eine notwendige Kaltanlass-Drehzahl gebracht und erst dann die K0-Kupplung (schleifend) geschlossen. Die Kurbelwelle der kalten Verbrennungskraftmaschine wird dann auf die notwendige Anlassdrehzahl hochgerissen. Bei dem Schwungstart entstehen Schwingungen, welche zu einer unangenehm empfunden Geräuschentwicklung führen. Es wurde diesseits festgestellt, dass dafür die Weichheit der Lamellenkupplung ursächlich ist, welche ein schwingendes Schlupfen der in Kontakt gebrachten oder sich im Einrückvorgang befindenden antagonistischen Reibflächen des Lamellenpakets zulässt.

Aus der WO 2015/172784 A2 ist ein Hybridmodul bekannt, das auf den Oberbegriff des Anspruchs 1 lesbar ist.

Der vorliegenden Erfindung liegt die Aufgabe zugrunde, die aus dem Stand der Technik bekannten Nachteile zumindest teilweise zu überwinden.

Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft ein Hybridmodul gemäß Anspruch 1.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder.

Eine Ordinalzahl größer eins bedingt nicht, dass zwangsläufig eine weitere derartige Komponente vorhanden sein muss. Es sei darauf hingewiesen, dass eine dauerhaft drehmomentübertragende Verbindung im Einsatz zwar nicht trennbar ist, aber optional mit einer Dämpfungseinrichtung und/oder einem Drehschwingungstilger versehen sind, sodass eine Schwingungsdämpfung und/oder Schwingungsentkopplung erzielbar ist. Dem hingegen ist bei einer drehmomentsteifen Verbindung keine Dämpfungseinrichtung und kein Schwingungstilger vorgesehen ist und Dämpfungseffekte sich auf geringe und vernachlässigbare Weichheiten eines Bauteilmaterials und/oder einer Verbindung zurückzuführen sind, wie beispielsweise auftretend in einer Drehmomentübertragung mittels einer Steckverzahnung. Eine drehmomentsteife Verbindung ist also ein Spezialfall einer dauerhaft drehmomentübertragenden Verbindung.

Das Hybridmodul ist dazu eingerichtet, eine Verbrennungskraftmaschine und eine elektrische Maschine mit einem Verbraucher lösbar drehmomentübertragend zu verbinden. Dazu weist das Hybridmodul einen Antriebswellenanschluss zur Aufnahme eines Drehmoments von einer Antriebswelle einer Verbrennungskraftmaschine auf, wobei oftmals ein Drehschwingungsdämpfer, beispielsweise ein Zweimassenschwungrad zwischengeschaltet und/oder ein Drehschwingungstilger, beispielsweise ein Fliehkraftpendel, parallelgeschaltet sind, so dass der Antriebswellenanschluss dann nur mittelbar, und zwar schwingungsentkoppelt, mit der Antriebswelle verbunden ist. Die Verbindung zwischen dem Antriebswellenanschluss und der Ausgangsseite einer Entkoppelungseinrichtung, beispielsweise die Sekundärmasse eines Zweimassenschwungrads, ist aber dauerhaft drehmomentübertragend mit dem verbrennerseitigen Lamellenkorb, also hier dem Innenkorb, verbunden; diese Verbindung ist also nicht durch Eingabe eines Signals und/oder einer Kraft trennbar und umfasst also keine Trennkupplung.

Weiterhin weist das Hybridmodul einen Getriebewellenanschluss zur Abgabe eines Drehmoments an einen Verbraucher auf, wobei der Verbraucher beispielsweise zumindest ein Antriebsrad zum Vortrieb des Kraftfahrzeugs. Oftmals werden Nebenaggregate aber über einen separaten Nebenantriebsstrang, beispielsweise einen Zugmitteltrieb, angetrieben. Für einige Anwendungen ist es vorteilhaft, dem Hybridmodul eine weitere Trennkupplung, beispielsweise eine Reibkupplung, als K1-Kupplung der Getriebeeingangswelle vorzuschalten und, sodass das Hybridmodul von dem Getriebe und zumindest einem der Verbraucher entkuppelbar ist. Dann ist der Getriebewellenanschluss mittels einer Modulwelle mit dem Kupplungseingang der K1-Kupplung verbunden. Die K1-Kupplung verbindet diese Modulwelle lösbar mit der Getriebeeingangswelle. In einigen Ausführungsformen sind weitere oder ausschließlich hier zumindest ein Drehschwingungstilger oder sogar ein Drehschwingungsdämpfer mit entsprechenden Anpassungen der Wellen zwischengeschaltet.

Zuletzt weist das Hybridmodul noch eine Drehmomentaufnahme zur Aufnahme eines Drehmoments von einer elektrischen Maschine, aber auch zur Drehmomentabgabe an die beispielsweise zur Rekuperation der Bremsenergie des Kraftfahrzeugs im Generatorbetrieb betreibbare elektrische Maschine, auf. Die Drehmomentaufnahme ist beispielsweise eine Riemenscheibe oder ein mit einer Riemenscheibe dauerhaft drehmomentübertragend verbindbarer Träger. Alternativ ist die Drehmomentaufnahme ein Rotor beziehungsweise ein Rotorträger oder ein mit diesem dauerhaft drehmomentübertragend verbindbarer Träger. Der Stator und dessen Drehmomentabstützung sind bei dieser Ausführungsform bevorzugt ebenfalls in das Hybridmodul integriert, wobei bevorzugt das gesamte Hybridmodul in ein Gehäuse des Getriebes, beispielsweise die Getriebeglocke, integrierbar ist.

Im Zentrum des Hybridmoduls ist eine trockene Lamellenkupplung mit zwei relativ zueinander um die Rotationsachse rotierbaren Lamellenkörben vorgesehen, wobei die Lamellenkupplung hinsichtlich des Funktionsprinzips beispielsweise konventionell ausgeführt ist. Dazu sind ein Außenkorb und ein Innenkorb vorgesehen, welche relativ zueinander um die Rotationsachse rotierbar sind. In den Außenkorb sind zumindest eine Außenlamelle und in den Innenkorb eine zu der Anzahl der Außenlamellen korrespondierende Anzahl von Innenlamellen axial bewegbar eingehängt, beispielsweise sind vier Außenlamellen und fünf Innenlamellen vorgesehen.

Ein Soll-Drehmoment von dem Antriebswellenanschluss auf die Drehmomentaufnahme und auf den Getriebewellenanschluss ist ausschließlich dann übertragbar, wenn das Lamellenpaket mit einer Soll-Anpresskraft axial verpresst ist. Ein Übertragen eines solchen Drehmoments ist im unverpressten Zustand des Lamellenpakets unterbrochen oder auf ein ausreichend geringes Schleppmoment reduziert.

Hier ist nun vorgeschlagen, dass der Innenkorb mit dem Antriebswellenanschluss drehmomentsteif verbunden ist. Und weiterhin ist vorgeschlagen, dass der Außenkorb mit dem Getriebewellenanschluss und mit der Drehmomentaufnahme drehmomentsteif verbunden ist. Diese Konfiguration ist genau umgekehrt zu den bekannten Ausführungsformen des derzeitigen Stands der Technik. Bevorzugt ist hierbei die Verbindung von dem Innenkorb mit dem Antriebswellenanschluss, sowie von dem Außenkorb mit dem Getriebewellenanschluss beziehungsweise mit der Drehmomentaufnahme kippsteif verbunden, beispielsweise mittels einer möglichst langen axial überlappenden Verbindung oder einstückigen Ausführung.

Diese Konfiguration hat den Vorteil, dass der Innenkorb mit einer sehr geringen radialen Ausdehnung und somit mit einem kurzen Hebel ausgeführt ist. Damit ist der Innenkorb gegenüber Schlupfschwingungen im Lamellenpaket infolge eines Hochreißens der Antriebswelle der Verbrennungskraftmaschine aus dem Stand mittels der elektrischen Maschine des Hybridmoduls bei einem Kaltanlassen sehr steif ausführbar. Der Außenkorb unterliegt solchen Lasten weniger, weil die elektrische Maschine in der Regel keine Drehschwingungen in einem relevanten Anregungsfrequenzbereich erzeugt. In einer Ausführungsform ist der Außenkorb zudem mittelbar oder unmittelbar über den Rotorträger abgestützt, welcher sehr steif abgestützt ist, beispielsweise über die Lagerung des Getriebewellenanschlusses, wobei eine solche Lagerung oftmals als zweireihiges axial verspanntes Wälzlager ausgeführt ist, beispielsweise in einer O-Anordnung. Eine derartig steife Lagerung ist oftmals notwendig, um das Spaltmaß zwischen Rotor und Stator im Betrieb ausreichend konstant zu halten.

Hiermit ist nicht nur die Geräuschemission beim Einkuppeln der Lamellenkupplung verringert oder sogar unterbunden, sondern auch der Verschleiß der Reibbeläge des Lamellenpakets erheblich reduziert. Sporadisch auftretende Reibschwingungen beeinflussen stark den Momentaufbau und das gewünschte Reibmoment. Die Reibschwingungen können die Lamellen (axial) freirütteln, sodass die (axiale) Verschiebereibung in den Lamellenverzahnungen (nicht konstant) reduziert werden und der Anpresskraft entgegenstehen; daraus wiederum entstehen Schwankungen des maximal übertragbaren Drehmoments. Wird die Entstehung von Reibschwingungen durch die genannten Maßnahmen verhindert, kann der Momentaufbau konstanter gemacht werden. Gemäß einer vorteilhaften Ausführungsform des Hybridmoduls ist der Innenkorb mittels eines Wälzlagers radial an dem Getriebewellenanschluss abgestützt, wobei das Wälzlager axial überlappend mit dem Lamellenpaket angeordnet ist.

Bei dieser Ausführungsform ist zum einen der sehr steif gelagerte Getriebewellenanschluss als radiales Gegenlager genutzt, wie dies auch konventionell bekannt ist. Weiterhin ist aber das Wälzlager des Innenkorb in axialer Überlappung mit dem Lamellenpaket angeordnet. Damit ist ein axialer Hebelanteil zu dem axialen Zentrum der Entstehung der zu vermeidenden Schwingungen im Lamellenpaket sehr kurz oder sogar null. Die Steifigkeit des Innenkorb gegen Kippschwingungen und Verformungsschwingungen um eine Umfangsachse ist damit erheblich erhöht. Für einige Anwendungsfälle lässt sich hiermit die Geräuschemission bei einem Kaltanlassen unterbinden oder im vorliegenden Schallschutzkonzept des betreffenden Kraftfahrzeugs zumindest in einen von dem Fahrer nicht mehr wahrnehmbaren Bereich reduzieren beziehungsweise verschieben.

Erfindungsgemäß ist der Außenkorb geschlitzt ausgeführt, wobei ein Staubableitblech radial außerhalb des Lamellenpakets angeordnet ist.

Für einen vergrößerten radialen Bauraum für das Lamellenpaket und damit einem vergrößerten übertragbaren maximalen (Soll-) Drehmoment bei gleicher Anpresskraft ist hier vorgeschlagen, den Außenkorb geschlitzt auszuführen. Das heißt, dass im Unterschied zu bekannten Ausführungsformen der Außenkorb nicht mit einer geprägten die radial innenliegenden Lamellenanschläge auch radial außen abbildenden Form ausgebildet ist. Vielmehr sind die Lamellenanschläge durch radial innenseitige schlitzförmige Aussparungen in dem Außenkorb gebildet. In einer vorteilhaften Ausführungsform sind die Schlitze radial durchgängig gebildet, sodass die entsprechenden Außenlaschen der Außenlamellen vollständig radial überlappend mit der radialen Wandstärke des Außenkorb im Bereich der Schlitze anlegbar sind. Dadurch ist das zwischen Außenkorb und Außenlamellen übertragbare Drehmoment ausreichend groß.

In einer Ausführungsform mit radial durchgehenden Schlitzen, bei welcher ein Umgebungsbauteil vor aus dem Lamellenpaket austretendem Abrieb und Staub geschützt werden soll, ist bevorzugt weiterhin ein oder eine Mehrzahl von Staubableitblechen radial außerhalb des Lamellenpakets oder zumindest radial außerhalb der Schlitze angeordnet. Bevorzugt ist das Staubableitblech aus dünnem und/oder leichtem Material gebildet. Beispielsweise ist das Staubableitblech als von dem Rotor wegweisend nach radial außen gestelltes Rohr ausgebildet. Der Staub und/oder Abrieb ist im Betrieb von der Zentripetalkraft und/oder einer Kühlluftströmung abführbar.

Gemäß einer vorteilhaften Ausführungsform des Hybridmoduls umfasst der Außenkorb einen Lamellenträger, wobei der Lamellenträger mit der Drehmomentaufnahme, bevorzugt mit dem Rotorträger, einstückig ausgebildet ist.

Der Außenkorb ist einstückig als Topf, beispielsweise tiefgezogen, ausgebildet. Alternativ umfasst der Außenkorb eine Mehrzahl von Einzelteilen, welche miteinander gefügt sind, beispielsweise geschweißt oder mittels Verzahnung formschlüssig verbunden. Der Lamellenträger ist die Komponente des Außenkorb, in welchen die Außenlamellen dauerhaft drehmomentübertragend und axial bewegbar eingehängt sind. Dieser Lamellenträger ist beispielsweise wie zuvor beschrieben geschlitzt oder umgeformt ausgeführt. Der Lamellenträger ist mit der Drehmomentaufnahme verbunden, also mittelbar oder unmittelbar beispielsweise mit dem Rotor der elektrischen Maschine oder mit einer Riemenscheibe eines Riemenantriebs mit außerachsiger elektrischer Maschine. Bevorzugt bildet der Lamellenträger eine Aufnahme für den Rotor und/oder bildet den sich radial nach innen zu dem Wälzlager erstreckenden Rotorträger einstückig beziehungsweise übernimmt diese Funktion integral. In einer besonders bevorzugten Ausführungsform bildet der Lamellenträger mit einem Bauteil zum formschlüssigen Verbinden mit der Getriebeeingangswelle beziehungsweise der Modulwelle zugleich einen Lagersitz für den Innenkorb, beispielsweise ausgeführt wie zuvor beschrieben.

In einer alternativen Ausführungsform ist der Außenkorb separat von der Drehmomentaufnahme gebildet und relativ dazu axial bewegbar, beispielsweise mittels eines Federmittels, beispielsweise einer Blattfeder, vorgespannt gehalten. Alternativ ist das Lamellenpaket damit verpresst oder ein Verpressen unterstützt. Der Außenlamellenträger ist über Blattfedern mit dem Rotorträger verbunden. Die Blattfedern sind beispielsweise tangential gesehen schräg aufgestellt beziehungsweise vorgeformt. Damit ist die Anpresskraft durch die auftretende Umfangskraft beim Schließen verstärkbar (Zugrichtung) und abschwächbar (Schubrichtung). Je größer die Schrägstellung der Blattfedern ist, desto größer ist eine erreichbare Verstärkung, welche signifikant ist, beispielsweise eine Verstärkung um 50 %. Damit können Tellerfederkraft und Ausrückkraft reduziert werden.

Bevorzugt ist der axial bewegbar ausgeführte Außenkorb zugleich als Zuganker mit einstückig gebildeter oder separat eingehängter Anpressplatte ausgebildet.

Gemäß einer vorteilhaften Ausführungsform des Hybridmoduls sind eine Normalfeder und ein Drucktopf zum Verpressen des Lamellenpakets vorgesehen, wobei der Drucktopf folgende Abschnitte aufweist:
- einen Außenabschnitt zum Übertragen einer axialen Kraft auf das Lamellenpaket;
- einen Innenabschnitt zur Aufnahme einer axialen Betätigungskraft von einer Betätigungseinrichtung; und
- einen Mittelabschnitt, wobei die Normalfeder gegen den Mittelabschnitt wirkend vorgespannt ist, sodass das Lamellenpaket von der Normalfeder in einem Normalzustand gehalten ist,
wobei der Außenabschnitt axial derart weich ausgeführt ist, dass der Drucktopf eine das Übertragen einer axialen Anpresskraft auf das Lamellenpaket verzögernde Modulationsfeder bildet.

Bei dieser Ausführungsform ist der Drucktopf zugleich als Modulationsfeder ausgebildet, indem der Außenabschnitt, also der radial äußere Bereich, so weich ausgebildet ist. Eine Modulationsfeder beziehungsweise hier die Elastizität des Drucktopfs erhöht das Verhältnis von dem Aktorweg zu Kupplungsmoment. Mit der Vergrößerung des Aktorwegs wird die Auflösung des Momentes erhöht und das eingestellte Moment ist robuster gegenüber Fluktuationen, Toleranzen, thermischen Veränderungen, und weiterem.

Bevorzugt ist die Normalfeder, beispielsweise eine Membranfeder, auch als Tellerfeder bezeichnet, oder ein Membranfederpaket zwischen einem axial fixierten Bauteil, beispielsweise einem Rotorträger oder Riemenscheibenträger, abgestützt und wirkt vorgespannt derart gegen den Drucktopf, dass das Lamellenpaket damit verpresst wird. Die Betätigungseinrichtung, beispielsweise ein Zentralausrücker, bevorzugt ein CSC [engl.: concentric slave cylinder], oder ein Kugel-Rampen-System, wirkt auf den Innenaufschnitt, also auf den radial inneren Bereich, und öffnet die Lamellenkupplung bei aktiver Betätigung von außen, beispielsweise bei Druckaufbau im Nehmerzylinder des CSC. Der Mittelabschnitt liegt radial zwischen dem Außenabschnitt und dem Innenabschnitt, aber nicht zwangsweise exakt mittig. Die Lage ist auszulegen nach der gewünschten Federkennlinie der Normalfeder und der integral gebildeten Modulationsfeder.

Unabhängig von vorhergehender Ausführungsform der Normalfeder ist der Drucktopf bevorzugt einstückig mit einem Zuganker oder über einen Formschluss zusammen mit einem Zuganker zum Zusammenziehen des Lamellenpakets ausgeführt.

In einer Ausführungsform ist weder eine Normalfeder noch ein Mittelabschnitt vorgesehen, wobei bevorzugt weiterhin keine Blattfeder oder Belagfederung vorgesehen ist. Der Drucktopf ist dann bevorzugt zum aktiven Verpressen eingerichtet, also das Lamellenpaket normal getrennt beziehungsweise die Lamellenkupplung normal offen. Unabhängig von dem Normalzustand der Lamellenkupplung weist der Drucktopf weiterhin integral die Funktion der Modulationsfeder auf.

Gemäß einem weiteren Aspekt wird ein Antriebsstrang vorgeschlagen, aufweisend eine Verbrennungskraftmaschine mit einer Antriebswelle, ein Getriebe mit einer Getriebewelle und eine elektrische Maschine, wobei die elektrische Maschine mittels der Drehmomentaufnahme eines Hybridmoduls nach einer Ausführungsform gemäß der obigen Beschreibung zwischen der Antriebswelle und der Getriebewelle einkuppelbar ist, indem eine Drehmomentübertragung zwischen der elektrischen Maschine und der Getriebewelle mittels der trockenen Lamellenkupplung des Hybridmoduls lösbar ist.

Der Antriebsstrang ist dazu eingerichtet, ein von einer Antriebsmaschine, beispielsweise einer Verbrennungskraftmaschine oder einem elektrischen Antriebsmotor, bereitgestelltes und über ihre Antriebswelle abgegebenes Drehmoment für zumindest einen Verbraucher zu übertragen. Ein beispielhafter Verbraucher ist zumindest ein Antriebsrad eines Kraftfahrzeugs und/oder ein elektrischer Generator zum Bereitstellen von elektrischer Energie. Umgekehrt ist auch eine Aufnahme einer von zum Beispiel einem Antriebsrad eingebrachten Trägheitsenergie umsetzbar. Diese Trägheitsenergie wird bevorzugt mittels des Hybridmoduls auf die als Generator betreibbare elektrische Maschine zur Rekuperation, also zur elektrischen Speicherung der Bremsenergie, übertragen. Weiterhin sind in einer bevorzugten Ausführungsform ein Drehmoment von der Verbrennungskraftmaschine und von der elektrischen Maschine mittels der Lamellenkupplung an einen Verbraucher übertragbar. Hier wird insoweit auf die bekannten Anforderungen an einen Antriebsstrang, beispielsweise in der Anwendung in einem Kraftfahrzeug, verwiesen.

Um das Drehmoment gezielt und/oder mittels eines Schaltgetriebes mit unterschiedlichen Übersetzungen zu übertragen beziehungsweise eine Übertragung des Drehmoments von der elektrischen Maschine und/oder der Verbrennungskraftmaschine von einem Verbraucher zu trennen, ist die Verwendung der oben beschriebenen Lamellenkupplung besonders vorteilhaft. Die Lamellenkupplung gemäß der vorliegenden Beschreibung ist besonders steif gegen Schlupfschwingungen ausgeführt und eignet sich besonders für den Einsatz als K0-Kupplung in einem hybridisierten Antriebsstrang mit konventioneller Konfiguration ohne leistungsstarke elektrische Maschine (Verbrenner-Antriebsstrang), sondern allein einer Lichtmaschine, wobei dort die Lichtmaschine durch das Hybridmodul ersetzt wird. Der für das Hybridmodul benötigte Bauraum ist also gering und dennoch ist die gewohnt geringe und/oder gewohnte Geräuschemission einhaltbar.

Gemäß einer vorteilhaften Ausführungsform des Antriebsstrangs ist die elektrische Maschine zum elektrischen Fahren eingerichtet, und ist bevorzugt dauerhaft drehmomentübertragend mit der Getriebewelle verbunden.

Bei dieser Ausführungsform ist die elektrische Maschine des Hybridmoduls zum rein elektrischen Fahren eingerichtet, sodass also von der Leistungsverteilung auf Verbrennungskraftmaschine und elektrische Maschine (des Hybridmoduls) nicht mehr von einer Hybridisierung eines konventionellen Verbrenner-Antriebsstrang gesprochen werden kann. Zugleich ist aber der erforderliche Bauraum ähnlich wie bei einem reinen Verbrenner-Antriebsstrang, sodass unter Umständen eine konventionelle Verbrenner-Konfiguration und eine leistungsstarke Hybrid-Konfiguration ohne größeren Aufwand in der gleichen Bauraumkonfiguration angeboten werden kann.

In einer Ausführungsform ist die Verbrennungskraftmaschine dann nur im laufenden Betrieb (Vortrieb) des zumindest einen Antriebsrads eines Kraftfahrzeugs anlassbar, weil auf eine weitere Kupplung hin zum Getriebe verzichtet wird. In einer alternativen Ausführungsform ist eine K1 -Kupplung dem Getriebeeingang vorgeschaltet, sodass die Verbrennungskraftmaschine auch im Stand des Kraftfahrzeugs angelassen werden kann. In beiden Fällen wird die Drehzahldifferenz zwischen elektrische Maschine und Verbrennungskraftmaschine beim Anlassen von der Lamellenkupplung durchgeführt.

In einer weiteren alternativen Ausführungsform ist eine K0-Kupplung dem Hybridmodul verbrennerseitig vorgeschaltet und die Lamellenkupplung bildet eine K1-Kupplung.

Diese Konfiguration entspricht funktionell der zuvor beschriebenen Ausführungsform mit der Lamellenkupplung als K0-Kupplung und nachgeschalteter K1-Kupplung.

Gemäß einem weiteren Aspekt wird ein Kraftfahrzeug vorgeschlagen, aufweisend zumindest ein Antriebsrad, welches mittels eines Antriebsstrangs nach einer Ausführungsform gemäß der obigen Beschreibung antreibbar ist.

Die meisten Kraftfahrzeuge weisen heutzutage einen Frontantrieb auf und ordnen daher bevorzugt die zumindest eine Antriebsmaschine, beispielsweise eine Verbrennungskraftmaschine und/oder ein (weiterer) elektrischer Antriebsmotor, und/oder die (zumindest eine) elektrische Maschine, vor der Fahrerkabine und quer zur Hauptfahrrichtung an. Der Bauraum ist gerade bei einer solchen Anordnung besonders gering und es ist daher besonders vorteilhaft, ein Hybridmodul kleiner Baugröße zu verwenden. Aber auch bei Ausführungsformen mit Heckanordnung ist der Bauraum beispielsweise aufgrund eines möglichst großen frei nutzbaren Kofferraumvolumens stark begrenzt. Ähnlich gestaltet sich der Einsatz eines Hybridmoduls in motorisierten Zweirädern, für welche eine deutlich gesteigerte Leistung bei gleichbleibendem Bauraum gefordert wird.

Verschärft wird diese Problematik bei Personenkraftwagen der Kleinwagenklasse nach europäischer Klassifizierung, welche aber gerade im Fokus einer Hybridisierung stehen. Die verwendeten Funktionseinheiten in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Der oben beschriebene Antriebsstrang weist eine Lamellenkupplung geringer Baugröße auf. Zugleich ist die Geräuschemission äußerst gering, auch bei einer koaxial im Hybridmodul beziehungsweise bei einer außerachsigen über einen Zugmitteltrieb mit dem Hybridmodul drehmomentübertragend verbindbaren leistungsstarken elektrische Maschine, beispielsweise eingerichtet zum rein elektrischen Fahren für den Stadtverkehr mit einer erreichbaren Maximalgeschwindigkeit von 60 km/h [sechzig Kilometer pro Stunde]. Zugleich ist die Herstellung des Hybridmoduls kostengünstig.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im britischen Markt entsprechen sie der Klasse Supermini beziehungsweise der Klasse City Car. Beispiele der Kleinwagenklasse sind ein Alfa Romeo Mito, Volkswagen Polo, Ford Fiesta oder Renault Clio. Bekannte Voll-Hybride in der Kleinwagenklasse sind der BMW i3, der Audi A3 e-tron oder der Toyota Yaris Hybrid.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein konventionelles Hybridmodul mit zentraler Lamellenkupplung;
- Fig. 2:: schematisch ein Antriebsstrang mit Hybridmodul;
- Fig. 3:: ein Hybridmodul (nicht Teil der Erfindung) mit axialbewegbaren Außenkorb;
- Fig. 4:: ein erfindungsgemäßes Hybridmodul mit einstückigen mit der Drehmomentaufnahme gebildeten Außenkorb;
- Fig. 5:: ein erfindungsgemäßes Hybridmodul mit normal geöffneter Lamellenkupplung;
- Fig. 6:: ein Hybridmodul (nicht Teil der Erfindung) mit Riemenscheibe; und
- Fig. 7:: ein Antriebstrang in einem Kraftfahrzeug mit Hybridmodul.

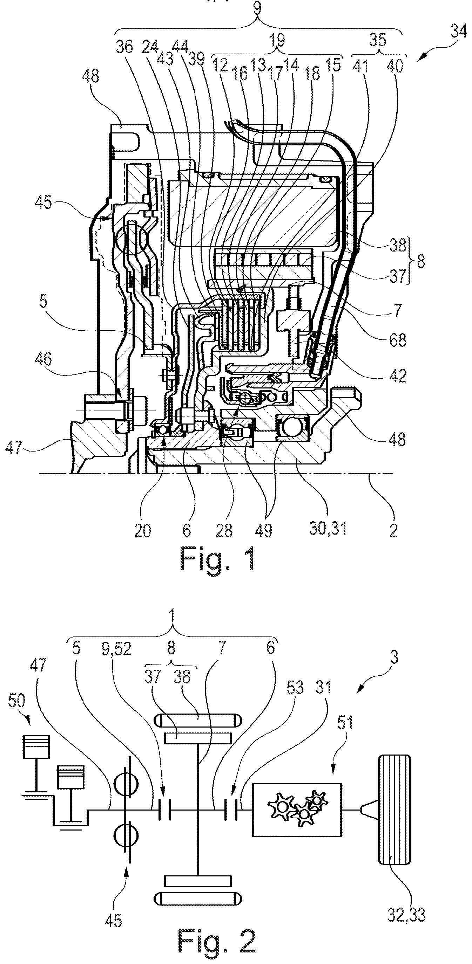

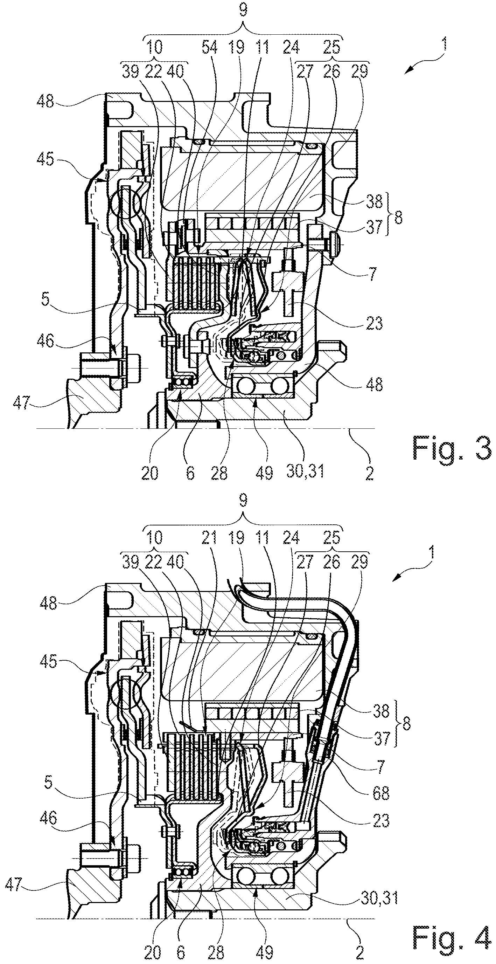

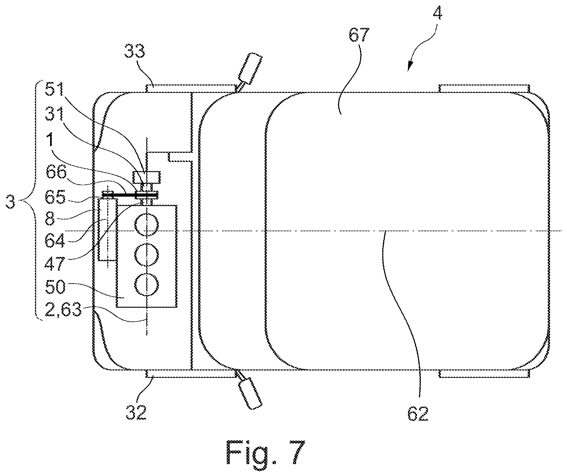

In Fig. 1 ist ein konventionelles Hybridmodul 34 mit einer Rotationsachse 2 gezeigt, bei welchem zentral nah bei der Rotationsachse 2 eine Lamellenkupplung 9 koaxial innerhalb einer elektrischen Maschine 8 angeordnet ist. In der Darstellung links ist angeschnitten eine Antriebswelle 47 einer Verbrennungskraftmaschine 50 (nicht dargestellt, vergleiche Fig. 2 oder Fig. 7) für einen mittels der Lamellenkupplung 9 (hinzu-) schaltbare Drehmomentübertragung auf die Getriebewelle 31 bzw. Modulwelle 30. Die Antriebswelle 47 ist über einen Antriebsaufnahme 46 (hier mittels einer Verschraubung mit der Primärmasse) eines Zweimassenschwungrads 45 verbunden, und das Zweimassenschwungrad 45 (hier mit seiner Sekundärmasse) mit dem Antriebswellenanschluss 5 (hier als Steckverzahnung ausgeführt) des konventionellen Hybridmoduls 34 verbunden. Dies ist der Übersichtlichkeit halber aber ohne Beschränkung der Allgemeinheit bei den Hybridmodulen 1 gemäß Fig. 3 bis Fig. 6 gleich ausgeführt.

Der Antriebswellenanschluss 5 ist hier in Fig. 1 mit einem konventionellen Außenkorb 36 verbunden, welcher radial innen mittels eines Wälzlagers 20 an dem Getriebewellenanschluss 6 abgestützt ist. Es ist hier zu erkennen, dass das Wälzlager 20 axial versetzt zu dem Lamellenpaket 19 angeordnet ist. In dem konventionellen Außenkorb 36 sind Außenlamellen 12 bis 15 in einem konventionellen (hier umgeformten) Lamellenträger 41 des Lamellenpakets 19 axial verschiebbar und dauerhaft drehmomentübertragend eingehängt. Zu demselben Lamellenpaket 19 gehörig sind antagonistisch zu den Außenlamellen 12 bis 15 und mit diesen jeweils axial abwechselnd angeordnet Innenlamellen 16 bis 18 in einen konventionellen Innenkorb 35 mit diesem dauerhaft drehmomentübertragend und zu diesem axial verschiebbar eingehängt. Weiterhin ist eine Anpresslamelle 39 wie eine der Innenlamellen in den konventionellen Innenkorb 35 eingehängt. Weiterhin ist eine Gegenplatte 40 einstückig mit dem konventionellen Innenkorb 35 gebildet.

Das Lamellenpaket 19 ist zur Drehmomentübertragung von dem konventionellen Außenkorb 36 auf den konventionellen Innenkorb 35 axial mittels der Normalfeder 24, hier als Membranfeder beziehungsweise Tellerfeder ausgeführt, mittels eines konventionellen Drucktopfs 43 und einer (hier separat ausgebildeten) Modulationsfeder 44 im Normalzustand verpresst, sodass die Lamellenkupplung 9 hier in einer normal-geschlossenen Konfiguration ausgeführt ist.

Zum Lösen einer Drehmomentübertragung von der Antriebwelle 47 auf die Getriebewelle 31 beziehungsweise Modulwelle 30 (und auf die Drehmomentaufnahme 7) ist eine Betätigungseinrichtung 28 vorgesehen, welche hier als hydrostatischer Nehmerkolben mit einem Ausrücklager ausgeführt ist. Die Betätigungseinrichtung 28 ist hier über eine hydrostatische Leitung 68 von außen betätigbar versorgt. Das Ausrücklager wirkt gegen den konventionellen Drucktopf 43 antagonistisch zur Normalfeder 24, sodass die aus der einbaubedingten Vorspannung der Normalfeder 24 resultierende Normalkraft (in der Darstellung von links nach rechts) auf das Lamellenpaket 19 aufgehoben wird.

Der konventionelle Innenkorb 35 ist hier beispielsweise stoffschlüssig mit der Drehmomentaufnahme 7 verbunden, welche hier mit dem Rotor 37 der elektrischen Maschine 8 verbunden ist, welche von dem Stator 38 um die Rotationsachse 2 rotierbar ist. Der Rotor 37 ist mittels des konventionellen Innenkorbs 35 mit dem Getriebewellenanschluss 6 verbunden und mittels der Modulwelle 30 beziehungsweise Getriebewelle 31 und dem Zentrallager 49 an dem Gehäuse 48 abgestützt. Die Drehzahl des Rotors 37 ist mittels eines Rotorlagesensors, eines sogenannten Resolvers 42, erfassbar.

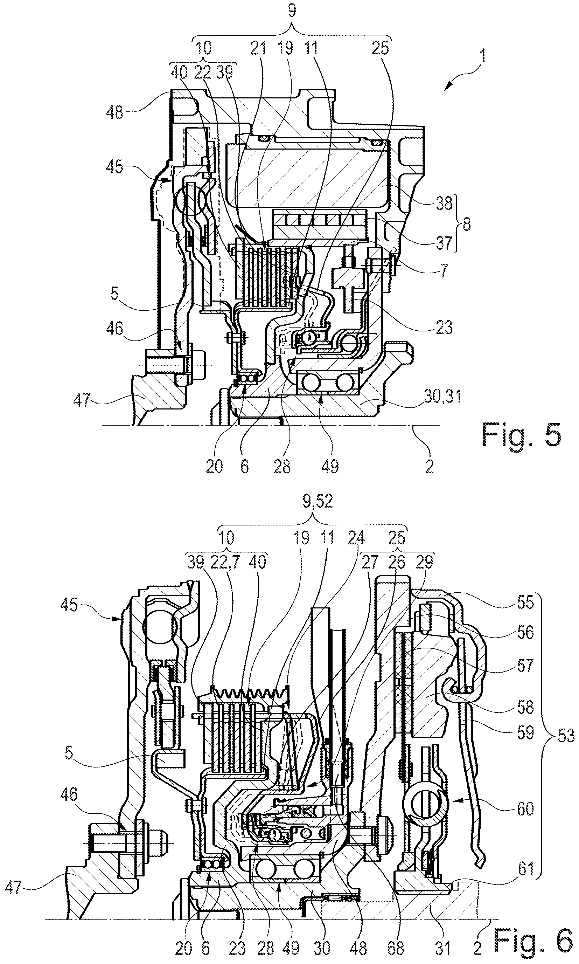

Der konventionelle Innenkorb 35 ist mit dem Getriebewellenanschluss 6 verbunden, welcher mit einer Modulwelle 30 oder Getriebewelle 31 (abhängig davon, ob eine K1-Kupplung 53 (vergleiche Fig. 2 oder Fig. 6) vorgesehen ist mittels einer Steckverzahnung dauerhaft drehmomentübertragend verbunden. Über ein Zentrallager 49, hier mittels zweier separater Kugellager gebildet, ist die Modulwelle 30 beziehungsweise Getriebewelle 31 und damit die gesamte Lamellenkupplung 9 gegenüber dem Gehäuse 48 rotierbar abgestützt.

In Fig. 2 ist eine nicht erfindungsgemäße schematische Darstellung eines (hybridisierten) Antriebsstrangs 3 gezeigt, wobei links in der Darstellung eine Verbrennungskraftmaschine 50 mit hier beispielhaft zwei Kolben angedeutet ist, welche mit ihrer Antriebswelle 47 über ein Zweimassenschwungrad 45 mit dem Antriebswellenanschluss 5 des Hybridmoduls 1 dauerhaft drehmomentübertragend verbunden ist. Die elektrische Maschine 8 des Hybridmoduls 1 ist mit ihrem Stator 38 drehmomentabgestützt (beispielsweise an einem Gehäuse 48, vergleiche Fig. 3). Der Rotor 37 ist mit der Drehmomentaufnahme 7 dauerhaft drehmomentübertragend, bevorzugt drehmomentsteif, verbunden. Um die Verbrennungskraftmaschine 50 anzulassen, wird die Lamellenkupplung 9, welche hier als K0-Kupplung ausgeführt ist, geschlossen. Um das Drehmoment der elektrischen Maschine 8 des Hybridmoduls 1 auf den Verbraucher, hier beispielsweise ein Antriebsrad 32 beziehungsweise 33 mittels eines Getriebes 51, beispielsweise eines Übersetzungsgetriebes, zu übertragen, ist hier mit dem Getriebewellenanschluss 6 eine K1-Kupplung 53 schließbar, welche über eine Getriebewelle 31 ein Drehmoment lösbar übertragbar macht. Für eine Zugabe eines Drehmoments von der Verbrennungskraftmaschinen 50 zu der elektrischen Maschine 8 sind sowohl die K0-Kupplung 52 als auch die K1-Kupplung 53 zu schließen. In einer Ausführungsform ist die K1-Kupplung als formschlüssig schließende Trennkupplung, beispielsweise als sogenannte Wedge-Clutch, ausgeführt. In einer anderen Ausführungsform ist die K1-Kupplung 53 weggelassen, sodass der Rotor 37 der elektrischen Maschine 8 mit den Antriebsrädern 32,33 dauerhaft mitrotiert.

In Fig. 3 ist ein nicht erfindungsgemäßes Hybridmodul 1 mit einer Rotationsachse 2 gezeigt, bei welcher nun der Innenkorb 11 und der Außenkorb 10 funktional derart vertauscht sind, dass der Innenkorb 11 drehmomentsteif mit dem Antriebswellenanschluss 5 verbunden ist und der Außenkorb 10 drehmomentsteif mit dem der Drehmomentaufnahme 7 und dem Getriebewellenanschluss 6 ausgebildet ist. In der Gesamtfunktion entspricht die dargestellte Konfiguration der konventionellen Ausführungsform beispielsweise gemäß der Fig. 1, sodass insoweit auf die dortige Beschreibung verwiesen wird. Das Lamellenpaket 19 ist beispielsweise konventionell ausgeführt und umfasst eine Mehrzahl von Außenlamellen und Innenlamellen. Die Lamellenkupplung 9 ist hier ebenfalls normal-geschlossen ausgeführt.

Bei allen dargestellten Lamellenkupplungen 9 in den Figuren 3 bis 6 sind zumindest zwei Positionen der Betätigungseinrichtung 28 und des Drucktopfs 25 (und gegebenenfalls der Normalfeder 24) dargestellt, und zwar im ausgerückten und im eingerückten Zustand im Neuzustand und bei maximalem Verschleiß beziehungsweise Setzungserscheinungen. Eine der beiden Positionen sind mit gestrichelten Linien dargestellt. Diese stellen die Extremstellungen an, für welche ein axialer Betätigungsweg mit entsprechender Baulänge vorgehalten werden muss.

Das Wälzlager 20, welches nun für die Lagerung des Innenkorbs 11 eingerichtet ist, ist axial überlappend mit dem Lamellenpaket 19 angeordnet. Damit ist das mögliche Kippmoment beziehungsweise Biegemoment auf den Innenkorb 11 im Vergleich zu einer Ausführungsform gemäß Fig. 1 sehr gering. Es sei aber darauf hingewiesen, dass dies ein optionales Merkmal ist. Aufgrund des in dieser Konfiguration verfügbar gemachten axialen Bauraums ist das Wälzlager 20 zweireihig ausgeführt, wodurch zudem im Vergleich zu einem einreihigen Wälzlager eine erhöhte Kippsteifigkeit erreicht wird. Alternativ ist das Wälzlager 20 einreihig und/oder mit einem größeren Wälzkörper beziehungsweise anderen Wälzkörper-Typ, beispielsweise Nadeln oder Zylinder, ausgeführt.

Der Außenkorb 10 ist in der Konfiguration gemäß Fig. 3 axial bewegbar wie ein Zuganker ausgeführt, wobei der Außenkorb 10 integral die Anpressplatte 39 und den Lamellenträger 22, hier geschlitzt ausgeführt, umfasst. Die Gegenplatte 40 ist von einem axial fixierten Bauteil des Außenkorbs 10 gebildet, welches sich radial erstreckt, beispielsweise scheibenförmig, und mit dem Getriebewellenanschluss 6 drehmomentsteif verbunden ist. Um das Lamellenpaket 19 zu verpressen, ist eine Normalfeder 24, beziehungsweise hier ein Federpaket mit zwei wechselseitig aufgestellten Membranfedern beziehungsweise Tellerfedern vorgesehen, welche gegen einen Mittelabschnitt 29 eines Drucktopfs 25 mit einer Axialkraft (Normalkraft, gemäß der Darstellung nach rechts) wirkt. Somit wird mittels der Anpressplatte 39 des als Zuganker wirkenden Außenkorbs 10 das Lamellenpaket 19 (normal) verpresst.

Übertragen auf den Außenkorb 10 wird diese Normalkraft der Normalfeder 24 über den Außenabschnitt 26 des Drucktopfs 25, welcher derart weich ausgeführt ist, dass er die Eigenschaften einer Modulationsfeder aufweist, also eine verlängerte Moment-Weg-Kennlinie und damit eine bessere Momentenauflösung bewirkt. Der Anteil des Außenkorbs 10, welcher axial bewegbar wie ein Zuganker ausgeführt ist, wird von dem Drucktopf 25 gemäß der Darstellung nach rechts gezogen, wenn sich die Normalfeder 24 entsprechend ihrer einbaubedingten axialen Vorspannung aufstellt.

Um das Lamellenpaket 19 zu öffnen, ist ein Betätigungseinrichtung 28 vorgesehen, welche beispielsweise wie in Fig. 1 dargestellt ein hydrostatischer Nehmerkolben ist. Die Betätigungseinrichtung 28 wirkt auf den Innenabschnitt 27 des Drucktopfs 25, sodass die Normalfeder 24 zusammengedrückt (und noch weiter verspannt) wird (hier in der Darstellung nach links), und sodass die Zugkraft von dem Außenabschnitt 26 auf die Anpressplatte 39 aufgehoben wird.

In der in Fig. 3 dargestellten Konfiguration des Hybridmoduls 1 ist optional weiterhin eine Blattfeder 54 beziehungsweise ein Blattfederpaket vorgesehen, welches zwischen der Drehmomentaufnahme 7 beziehungsweise dem axial fixierten Anteil des Außenkorbs 10 und der Anpressplatte 39 vorgespannt eingebaut ist, sodass die Anpresskraft durch die auftretende Umfangskraft beim Schließen verstärkbar (Zugrichtung) und abschwächbar (Schubrichtung) ist. Die Blattfedern 54 verbinden den Lamellenträger 22 des Außenkorbs 10 und die Anpressplatte 39 mit der den Rotorträger ausbildenden Drehmomentaufnahme 7. Der Lamellenträger 22 des Außenkorbs 10 ist also axial verschieblich. Die Anordnung der Blattfedern 54 radial außerhalb des Lamellenpakets 19 vermeidet oder reduziert zumindest ein Taumeln des Lamellenträgers 22 des Außenkorbs 10 bei Reibschwingungen.

Die Modulwelle 30 beziehungsweise Getriebewelle 31 ist hier über ein Zentrallager 49 an dem Gehäuse 48 abgestützt, bevorzugt als ein in einer O-Anordnung verspanntes doppelreihiges Wälzlager. Hierbei ist ein separater Rotorträger 23 vorgesehen, welcher aber auch in einer Ausführungsform in den mit dem Getriebewellenanschluss 6 verbundenen axial fixierten Abschnitt des Außenkorbs 10 integrierbar ist. (vergleiche Fig. 6).

Erfindungsgemäß, ist in Fig. 4 eine ähnliche Konfiguration wie in Fig. 3 mit der Übersichtlichkeit halber weitestgehend gleichen oder ähnlichen Komponenten gezeigt, sodass insoweit auf die vorhergehende Beschreibung verwiesen wird. Hierbei ist der Außenkorb 10 mit der Drehmomentaufnahme 7 axial fixiert beziehungsweise dessen Lamellenträger 22 mit der Drehmomentaufnahme 7 einstückig ausgeführt. Die Gegenplatte 40 ist hier (optional) mittels einer Madenschraube mit dem sich radial erstreckenden Bauteil verbunden, welches einstückig den Getriebewellenanschluss 6 bildet. Der Lamellenträger 22 des Außenkorbs 10 ist hier geschlitzt ausgeführt. Zum Schutz des Motorspalts der elektrischen Maschine 8 ist ein dünnes nach radial außen gestelltes rohrförmiges Staubableitblech 21 vorgesehen, welches ein Eindringen von Abrieb und Staub in den Motorspalt zwischen Rotor 37 und Stator 38 verhindert. Die Normalfeder 24 ist mit (hier im Vergleich zu Fig. 3 nur) einer Membranfeder ausgeführt und wirkt im Übrigen genauso wie die Normalfeder 24 wie sie in Fig. 3 beschrieben ist. Hier ist der Drucktopf 25 einstückig mit einem Zuganker ausgeführt, welcher auf die Anpressplatte 39, beispielsweise mittels eines Sicherungsrings, mit einer Zugkraft einwirkt. Bevorzugt ist der Drucktopf 25 auch hier in seinem Außenabschnitt 26 derart weich gestaltet, dass eine zusätzliche Modulationsfeder entfallen kann.

In Fig. 5 ist ein erfindungsgemäßes Hybridmodul 1 in einer ähnlichen Konfiguration wie in Fig. 4 mit der Übersichtlichkeit halber weitestgehend gleichen oder ähnlichen Komponenten gezeigt, sodass insoweit auf die dortige Beschreibung verwiesen wird. Hierbei ist nun die Lamellenkupplung 9 als normal-offen konfiguriert, sodass nur bei aktiver Betätigung mittels der Betätigungseinrichtung 28 das Lamellenpaket 19 verpresst wird. Hierzu sind im Vergleich zu den zuvor gezeigten Konfigurationen die Positionen der Anpressplatte 39 und der Gegenplatte 40 axial vertauscht und der Drucktopf 25 wirkt (in der Darstellung von rechts) auf die Anpressplatte 39 mit einer Druckkraft als Anpresskraft (von rechts nach links). Bevorzugt ist der Drucktopf 25 auch hier derart weich ausgeführt, dass eine Modulationsfeder entfallen kann.

Hier sind die Drehmomentaufnahme 7 und der Lamellenträger 22 des Außenkorbs 10 separate Bauteile, welche hier stoffschlüssig, beispielsweise mittels Schweißen, miteinander verbunden sind. Der sich radial erstreckenden Anteil des Außenkorbs 10 ist einstückig mit dem Lamellenträger 22 ausgeführt und separat von dem Getriebewellenanschluss 6 gebildet, wobei der Außenkorb hier mit dem Getriebewellenanschluss 6 in dieser Ausführungsform verschweißt ist. Die Betätigungseinrichtung 28 ist hier ein mechanisches Kugel-Rampen-System, wobei bei Anlegen eines Drehmoments von außen eine erste Rampe (hier rechts) gegenüber einer zweiten Rampe (hier links) ein axialer Abstand dazwischen verändert wird. Diese relative Drehung der beiden Rampen wird über (hier als Kugeln ausgeführte) Wälzkörper reibungsarm ausgeführt. Die Veränderung des axialen Abstands zwischen den beiden Rampen bewirkt die Betätigung des Drucktopfs 25.

In Fig. 6 ist eine Konfiguration eines nicht erfindungsgemäßes Hybridmoduls 1 für eine außerachsig angeordnete elektrische Maschine 8 (nicht dargestellt, vergleiche Fig. 7) dargestellt, wobei hier weiterhin unabhängig davon eine K1-Kupplung dargestellt ist. Die Drehmomentaufnahme 7, welche hier einstückig als Riemenscheibe und als Lamellenträger 22 des Außenkorbs 10 ausgebildet ist, ist hier mit dem sich radial erstreckenden und axial fixierten Bauteil des Außenkorbs 10, welches die Gegenplatte 40 umfasst, (optional) mittels Verschweißen, verbunden und bildet zugleich das Gegenlager für die Normalfeder 24. Dieses sich radial erstreckende Bauteil des Außenkorbs 10 ist zugleich der Rotorträger 23 für die Riemenscheibe und einstückig mit dem Getriebewellenanschluss 6 ausgeführt. Die Betätigungseinrichtung 28 und der Drucktopf 25 sowie die Normalfeder 24 und die Konfiguration der Anpressplatte 39 und des Lamellenpakets 19 ist hier der Übersichtlichkeit halber wie bei der Konfiguration in Fig. 4 ausgeführt und insoweit wird auf die dortige Beschreibung verwiesen.

Der Getriebewellenanschluss 6 ist hier mit einer Modulwelle 30 drehmomentsteif verbunden, welche wiederum mit der K1-Gegenplatte 56 der K1-Kupplung 53 dauerhaft drehmomentübertragend, hier drehmomentsteif, verbunden ist, hier beispielsweise verschraubt. Die K1-Kupplung 53 umfasst einen mitrotierenden Kupplungsdeckel 55, eine K1-Anpressplatte 58 und eine K1-Reibscheibe 57, welche mittels einer K1-Membranfeder 59 an dem A1-Kupplungsdeckel 55 abgestützt gegen die K1-Gegenplatte 56 pressbar ist, sodass ein Soll-Drehmoment, hier mittels eines K1-Drehschwingungsdämpfer 60 über eine K1-Getriebewellennabe 61 dauerhaft drehmomentübertragend mit einer Getriebewelle 31 verbunden ist.

Es sei nochmals darauf hingewiesen, dass die Ähnlichkeit der unterschiedlichen Konfigurationen des Hybridmoduls 1 hier der Übersichtlichkeit halber gewählt wurde und zur Vereinfachung so dargestellt sind, dass erkennbar ist, dass die verschiedenen Funktionskomponenten in den Darstellungen gemäß der Fig. 3 bis Fig. 6 miteinander austauschbar sind und damit weitere Kombinationen offenbart sind, beispielsweise durch Austauschen der Betätigungseinrichtungen 28, der Konfiguration des Lamellenpakets 19 beziehungsweise der Lamellenkupplung 9, der koaxialen Anordnung der elektrische Maschine 8 oder eben der außerachsigen Anordnung mit einem Zugmitteltrieb und weiteres. Weiterhin ist das Zweimassenschwungrad 45 nur optional zwischengeschaltet und in einer Ausführungsform ist darauf verzichtet oder es ist dem Hybridmodul 1 nachgeschaltet oder an anderer Stelle in das Hybridmodul 1 integriert. Weiterhin ist beispielsweise zumindest ein Fliehkraftpendel im Drehmomentfluss vorgesehen, bevorzugt axial nah bei der Antriebswelle 47. In einer Ausführungsform ist die elektrische Maschine 8 nicht zum Kaltanlassen der Verbrennungskraftmaschine 50 eingerichtet und zusätzlich ein Anlasser, beispielsweise über einen Zahnkranz eingekoppelt, vorgesehen.

In Fig. 7 ist rein schematisch ein (hybridisierter) Antriebstrang 3 in einem Kraftfahrzeug 4 dargestellt, wobei sich der Antriebstrang 3 mit der Verbrennungskraftmaschinen 50, der elektrischen Maschine 8 und dem Hybridmodul 1 mit der Rotationsachse 2, der E-Motorachse 64 beziehungsweise der Verbrenner-Motorachse 63 vor der Fahrerkabine 67 und quer zur Längsachse 62 des Kraftfahrzeugs 4 befindet. Mittels des Antriebsstrangs 3 sind über ein nicht näher dargestelltes Fahrwerk ein linkes Antriebsrad 32 und ein rechtes Antriebsrad 33 antreibbar, hier optional die Vorderräder des Kraftfahrzeugs 4. Die elektrische Maschine 8 ist hier außerachsig parallel zu der Verbrennungskraftmaschine 50 angeordnet und deren E-Motorwelle 65 über einen Zugmitteltrieb, beispielsweise einen Riemen 66, mit dem Hybridmodul 1 dauerhaft drehmomentübertragend verbunden. Die Verbrennungskraftmaschine 50 ist über ihre Antriebswelle 47 mit dem Hybridmodul 1 dauerhaft drehmomentübertragend verbunden und das Hybridmodul 1 wiederum ist mit einer Getriebewelle 31 eines Getriebes 51 verbunden, beispielsweise ein Schaltgetriebe oder ein Umschlingungsgetriebe. Das Hybridmodul 1 ist beispielsweise wie in Fig. 6 dargestellt ausgeführt und umfasst eine als K0-Kupplung 52 ausgeführte Lamellenkupplung 9 (vergleiche Fig. 6), wobei hier auf eine K1-Kupplung 53 (vergleiche Fig. 6) verzichtet wurde.

Mit dem hier vorgeschlagenen Hybridmodul und der besonderen Anordnung des Außenkorbs und dem Innenkorb der Lamellenkupplung ist eine geringe Geräuschemission beim Kaltanlassen der Verbrennungskraftmaschine mittels der elektrischen Maschine des Hybridmoduls erzielbar.

### Bezugszeichenliste

- 1: Hybridmodul
- 2: Rotationsachse
- 3: Antriebsstrang
- 4: Kraftfahrzeug
- 5: Antriebswellenanschluss
- 6: Getriebewellenanschluss
- 7: Drehmomentaufnahme
- 8: elektrische Maschine
- 9: Lamellenkupplung
- 10: Außenkorb
- 11: Innenkorb
- 12: erste Außenlamelle
- 13: zweite Außenlamelle
- 14: dritte Außenlamelle
- 15: vierte Außenlamelle
- 16: erste Innenlamelle
- 17: zweite Innenlamelle
- 18: dritte Innenlamelle
- 19: Lamellenpaket
- 20: Wälzlager
- 21: Staubableitblech
- 22: Lamellenträger
- 23: Rotorträger
- 24: Normalfeder
- 25: Drucktopf
- 26: Außenabschnitt
- 27: Innenabschnitt
- 28: Betätigungseinrichtung
- 29: Mittelabschnitt
- 30: Modulwelle
- 31: Getriebewelle
- 32: linkes Antriebsrad
- 33: rechtes Antriebsrad
- 34: konventionelles Hybridmodul
- 35: konventioneller Innenkorb
- 36: konventioneller Außenkorb
- 37: Rotor
- 38: Stator
- 39: Anpressplatte
- 40: Gegenplatte
- 41: konventioneller Lamellenträger
- 42: konventioneller Rotorträger
- 43: konventioneller Drucktopf
- 44: konventionelle Modulationsfeder
- 45: Zweimassenschwungrad
- 46: Antriebsaufnahme
- 47: Antriebswelle
- 48: Gehäuse
- 49: Zentrallager
- 50: Verbrennungskraftmaschine
- 51: Getriebe
- 52: K0-Kupplung
- 53: K1-Kupplung
- 54: Blattfeder
- 55: K1-Kupplungsdeckel
- 56: K1-Gegenplatte
- 57: K1-Reibscheibe
- 58: K1-Anpressplatte
- 59: K1-Membranfeder
- 60: K1-Drehschwingungsdämpfer
- 61: K1-Getriebewellennabe
- 62: Längsachse
- 63: Verbrenner-Motorachse
- 64: E-Motorachse
- 65: E-Motorwelle
- 66: Riemen
- 67: Fahrerkabine
- 68: hydrostatische Leitung

## Patentansprüche

1. Hybridmodul (1) mit einer Rotationsachse (2) für einen Antriebsstrang (3) eines Kraftfahrzeugs (4), aufweisend zumindest die folgenden Komponenten:
- einen Antriebswellenanschluss (5) zur Aufnahme eines Drehmoments;
- einen Getriebewellenanschluss (6) zur Abgabe eines Drehmoments;
- eine Drehmomentaufnahme (7) zur Aufnahme eines Drehmoments von einer elektrischen Maschine (8);
- eine trockene Lamellenkupplung (9) mit zwei relativ zueinander um die Rotationsachse (2) rotierbaren Lamellenkörben (10,11), nämlich einem Außenkorb (10) und einem Innenkorb (11), wobei in den Außenkorb (10) zumindest eine Außenlamelle (12,13,14,15) und in den Innenkorb (11) eine zu der Anzahl der Außenlamellen (12,13,14,15) korrespondierende Anzahl von Innenlamellen (16,17,18) axial bewegbar eingehängt sind, sodass die zumindest eine Außenlamelle (12,13,14,15) und die korrespondierende Anzahl von Innenlamellen (16,17,18) ein Lamellenpaket (19) bilden,
wobei ein Soll-Drehmoment von dem Antriebswellenanschluss (5) auf die Drehmomentaufnahme (7) und auf den Getriebewellenanschluss (6) ausschließlich dann übertragbar ist, wenn das Lamellenpaket (19) mit einer Soll-Anpresskraft axial verpresst ist, wobei jeweils drehmomentsteif verbunden sind:
- der Innenkorb (11) mit dem Antriebswellenanschluss (5); sowie
- der Außenkorb (10) mit dem Getriebewellenanschluss (6) und mit der Drehmomentaufnahme (7),
**dadurch gekennzeichnet, dass** der Außenkorb (10) geschlitzt ausgeführt ist, wobei ein Staubableitblech (21) radial außerhalb des Lamellenpakets (19) angeordnet ist.

2. Hybridmodul (1) nach Anspruch 1, wobei der Innenkorb (11) mittels eines Wälzlagers (20) radial an dem Getriebewellenanschluss (6) abgestützt ist, wobei das Wälzlager (20) axial überlappend mit dem Lamellenpaket (19) angeordnet ist.

3. Hybridmodul (1) nach einem der vorhergehenden Ansprüche, wobei der Außenkorb (10) einen Lamellenträger (22) umfasst, wobei der Lamellenträger (22) mit der Drehmomentaufnahme (7), bevorzugt mit dem Rotorträger (23), einstückig ausgebildet ist.

4. Hybridmodul (1) nach einem der vorhergehenden Ansprüche, wobei eine Normalfeder (24) und ein Drucktopf (25) zum Verpressen des Lamellenpakets (19) vorgesehen sind, wobei der Drucktopf (25) folgende Abschnitte aufweist:
- einen Außenabschnitt (26) zum Übertragen einer axialen Kraft auf das Lamellenpaket (19);
- einen Innenabschnitt (27) zur Aufnahme einer axialen Betätigungskraft von einer Betätigungseinrichtung (28); und
- einen Mittelabschnitt (29), wobei die Normalfeder (24) gegen den Mittelabschnitt (29) wirkend vorgespannt ist, sodass das Lamellenpaket (19) von der Normalfeder (24) in einem Normalzustand gehalten ist,
wobei der Außenabschnitt (26) axial derart weich ausgeführt ist, dass der Drucktopf (25) eine das Übertragen einer axialen Anpresskraft auf das Lamellenpaket (19) verzögernde Modulationsfeder bildet.

5. Antriebsstrang (3), aufweisend eine Verbrennungskraftmaschine (38) mit einer Antriebswelle (39), ein Getriebe (40) mit einer Getriebewelle (41) und eine elektrische Maschine (8) und ein Hybridmodul (1), wobei die elektrische Maschine (8) mittels der Drehmomentaufnahme (7) des Hybridmoduls (1) nach einem der vorhergehenden Ansprüche zwischen der Antriebswelle (39) und der Getriebewelle (41) einkuppelbar ist, indem eine Drehmomentübertragung zwischen der elektrischen Maschine (8) und der Getriebewelle (41) mittels der trockenen Lamellenkupplung (9) des Hybridmoduls (1) lösbar ist.

6. Antriebsstrang (3) nach Anspruch 5, wobei die elektrische Maschine (8) zum elektrischen Fahren eingerichtet ist, und bevorzugt dauerhaft drehmomentübertragend mit der Getriebewelle (31) verbunden ist.

7. Kraftfahrzeug (4), aufweisend zumindest ein Antriebsrad (32,33), welches mittels eines Antriebsstrangs (3) nach Anspruch 6 antreibbar ist.

## Claims

1. A hybrid module (1) with a rotation axis (2) for a drive train (3) of a motor vehicle (4), having at least the following components:
- a driveshaft connection (5) for receiving a torque;
- a transmission shaft connection (6) for outputting a torque;
- a torque-receiving means (7) for receiving a torque from an electrical machine (8);
- a dry multi-plate clutch (9) with two disk holders (10, 11) that can be rotated relative to one another about the rotation axis (2), specifically an outer holder (10) and an inner holder (11), wherein at least one outer plate (12, 13, 14, 15) and a number of inner plates (16, 17, 18) corresponding to the number of outer plates (12, 13, 14, 15) are hung in the inner holder (11) so that they can move axially, so that the at least one outer plate (12, 13, 14, 15) and the corresponding number of inner plates (16, 17, 18) form a plate stack (19),
wherein a target torque can only be transmitted from the driveshaft connection (5) to the torque-receiving means (7) and to the transmission shaft connection (6) if the plate stack (19) is axially pressed with a target contact pressure force, wherein each is connected in a torsionally rigid manner:
- the inner holder (11) is connected to the driveshaft connection (5); and
- the outer holder (10) is connected to the gear shaft connection (6) and the torque-receiving means (7),
**characterised in that** the outer holder (10) is slotted, wherein a dust deflector plate (21) is arranged radially outside of the plate stack (19).

2. The hybrid module (1) according to claim 1, wherein the inner holder (11) is supported radially on the transmission shaft connection (6) by means of a roller bearing (20), wherein the roller bearing (20) is arranged axially overlapping with the plate stack (19).

3. The hybrid module (1) according to any one of the preceding claims, wherein the outer holder (10) comprises a plate carrier (22), wherein the plate carrier (22) is integrally formed with the torque-receiving means (7), preferably with the rotor carrier (23).

4. The hybrid module (1) according to any one of the preceding claims, wherein a normal spring (24) and a pressure pot (25) are provided for pressing the plate stack (19), wherein the pressure pot (25) has the following sections:
- an outer section (26) for transmitting an axial force to the plate stack (19);
- an inner section (27) for receiving an axial actuating force from an actuator (28); and
- a middle section (29), wherein the normal spring (24) is biased acting against the middle section (29), so that the plate stack (19) is held in a normal state by the normal spring (24),
wherein the outer section (26) is designed to be axially soft in such a way that the pressure pot (25) forms a modulation spring that delays the transmission of an axial contact pressure force to the plate stack (19).

5. A drive train (3), having an internal combustion engine (38) with a driveshaft (39), a transmission (40) with a transmission shaft (41) and an electrical machine (8) and a hybrid module (1), wherein the electrical machine (8) can be coupled between the driveshaft (39) and the transmission shaft (41) by means of the torque-receiving means (7) of the hybrid module (1) according to any one of the preceding claims, in that a torque transmission between the electrical machine (8) and the transmission shaft (41) can be released by means of the dry multi-plate clutch (9) of the hybrid module (1).

6. The drive train (3) according to claim 5, wherein the electrical machine (8) is configured for electric driving and is preferably permanently connected to the transmission shaft (31) in a torque-transmitting manner.

7. A motor vehicle (4) having at least one drive wheel (32, 33) which can be driven by means of a drive train (3) according to claim 6.

## Revendications

1. Module hybride (1) à axe de rotation (2) pour un train d'entraînement (3) d'un véhicule automobile (4) comprenant au moins les composants suivants :
- un raccord d'arbre d'entraînement (5) pour recevoir un couple ;
- un raccord d'arbre de transmission (6) pour délivrer un couple ;
- un récepteur de couple (7) pour recevoir un couple provenant d'une machine électrique (8);
- un embrayage multidisque à sec (9) avec deux paniers à disques (10, 11) pouvant tourner l'un par rapport à l'autre autour de l'axe de rotation (2), à savoir un panier extérieur (10) et un panier intérieur (11), dans le panier extérieur (10) au moins un disque extérieur (12, 13, 14, 15) et dans le panier intérieur (11) un nombre de disques intérieurs (16, 17, 18) correspondant au nombre de disques extérieurs (12, 13, 14, 15) étant suspendus de manière à se déplacer axialement de façon que l'au moins un disque extérieur (12, 13, 14, 15) et le nombre correspondant de disques intérieurs (16, 17, 18) forment un bloc de disques (19),
un couple de consigne ne pouvant alors être transmis du raccord d'arbre d'entraînement (5) au récepteur de couple (7) et au raccord d'arbre de transmission (6) que si le bloc de disques (19) est pressé axialement avec une force de contact de consigne, chaque disque étant relié solidaire en rotation :
- le panier intérieur (11) avec le raccord d'arbre d'entraînement (5) ; ainsi que
- le panier extérieur (10) avec le raccord d'arbre de transmission (6) et avec le récepteur de couple (7),
**caractérisé en ce que** le panier extérieur (10) est fendu, une plaque déflectrice de poussière (21) étant agencée radialement à l'extérieur du bloc de disques (19).

2. Module hybride (1) selon la revendication 1, le panier intérieur (11) étant supporté radialement sur le raccord d'arbre de transmission (6) au moyen d'un roulement à rouleaux (20), le roulement à rouleaux (20) étant agencé en chevauchement axial avec le bloc de disques (19).

3. Module hybride (1) selon l'une quelconque des revendications précédentes, le panier extérieur (10) comprenant un porte-disques (22), le porte-disques (22) étant formé d'un seul tenant avec le récepteur de couple (7), de préférence avec le support de rotor (23).

4. Module hybride (1) selon l'une quelconque des revendications précédentes, un ressort normal (24) et un pot de pression (25) servant à presser le bloc de disques (19), le pot de pression (25) présentant les sections suivantes :
- une section extérieure (26) pour transmettre une force axiale au bloc de disques (19) ;
- une section intérieure (27) pour recevoir une force d'actionnement axiale d'un actionneur (28) ; et
- une section médiane (29), le ressort normal (24) étant précontraint de manière à agir contre la section médiane (29), de façon que le bloc de disques (19) soit maintenu dans un état normal par le ressort normal (24),
la section extérieure (26) étant conçue pour être axialement souple de façon que le pot de pression (25) forme un ressort de modulation qui retarde la transmission d'une force de de contact axiale au bloc de disques (19).

5. Train d'entraînement (3), comprenant un moteur à combustion interne (38) avec un arbre d'entraînement (39), une transmission (40) avec un arbre de transmission (41) et une machine électrique (8) et un module hybride (1), la machine électrique (8) pouvant être couplée entre l'arbre d'entraînement (39) et l'arbre de transmission (41) au moyen du récepteur de couple (7) du module hybride (1) selon l'une quelconque des revendications précédentes, en ce que le transfert de couple est libérable entre la machine électrique (8) et l'arbre de transmission (41) au moyen de l'embrayage multidisque à sec (9) du module hybride (1).

6. Train d'entraînement (3) selon la revendication 5, la machine électrique (8) étant conçue pour un entraînement électrique et étant de préférence reliée en permanence à l'arbre de transmission (31) de manière à transmettre le couple.

7. Véhicule automobile (4) comprenant au moins une roue motrice (32, 33) pouvant être entraînée au moyen d'un train d'entraînement (3) selon la revendication 6.
